# EUROPÄISCHE PATENTSCHRIFT

(11) **EP 1 211 216 B1**
(45) Veröffentlichungstag und Bekanntmachung des Hinweises auf die Patenterteilung: **22.07.2009**
(21) Anmeldenummer: 01125722.7
(22) Anmeldetag: 27.10.2001
(51) Int. Cl.: B66F 9/075, B60N 2/52, B60N 2/38

(54) **Flurförderzeug mit einer Bodenplattform und einem Fahrersitz**
Load handling vehicle with a floor plate and a driver's seat
Véhicule de transport de charges comportant une plate-forme et un siège conducteur

(30) Priorität: 08.11.2000 DE 10055304
(43) Veröffentlichungstag der Anmeldung: 05.06.2002
(73) Patentinhaber: STILL WAGNER GmbH, 72766 Reutlingen-Mittelstadt (DE)
(72) Erfinder: Marquardt, Jürgen, Dipl.-Ing., 75331 Engelsbrand (DE)
(74) Vertreter: Geirhos, Johann

(56) Entgegenhaltungen:
- WO-A-99/10271
- DE-A- 1 580 705
- DE-U- 9 300 762
- US-A- 4 392 546
- US-A- 4 768 831

## Beschreibung

Die Erfindung betrifft ein Flurförderzeug mit einem Fahrerplatz, der eine stufenlos verstellbare und gefederte Bodenplattform und einen Fahrersitz aufweist.

Ein als Niederhubwagen ausgebildetes gattungsgemäßes Flurförderzeug ist aus der DE-G 93 00 762 U1 bekannt. Die Bodenplattform dieses Flurförderzeugs kann in der Höhe und im Neigungswinkel eingestellt werden. Nachdem die gewünschte Position erreicht ist, wird die Bodenplattform verriegelt. In solchen Flurförderzeugen werden Fahrstöße und Fahrschwingungen, die beim Überfahren z.B. von Türschwellen, Bodendehnfugen, Laderampen, rauhen und unebenen Hallen- und Hofböden entstehen, direkt auf den Fahrer übertragen. Darüber hinaus ist es wünschenswert, die ergonomischen Bedingungen trotz bereits vorliegender Einstellbarkeit der Bodenplattform noch weiter zu verbessern.

Aus der WO 99/10271 A1 ist ein Flurförderzeug mit einem höhenverstellbaren und gefederten Fahrersitz bekannt. An einer festen Bodenplatte sind mit den Füßen der Bedienperson zu bedienende Schalter angeordnet. Sofern eine Bedienperson auf der Bodenplatte steht, werden Fahrstöße und Fahrschwingungen direkt auf den stehenden Fahrer übertragen.

Der vorliegenden Erfindung liegt die Aufgabe zu Grunde, ein Flurförderzeug der eingangs genannten Art zur Verfügung zu stellen; das während des Fahrbetriebs die auf eine Bedienperson einwirkenden Belastungen verringert und möglichst unter allen Fahrbedingungen eine ergonomische Körperhaltung der Bedienperson erlaubt.

Diese Aufgabe wird erfindungsgemäß dadurch gelöst, dass der Fahrersitz gefedert und stufenlos höhenverstellbar ist, wobei der Fahrersitz und die Bodenplattform jeweils auf einem Führungsschlitten befestigt sind, der in einer fest mit dem Flurförderzeug verbundenen Führungsschiene vertikal beweglich gelagert ist und mit einer federnd blockierbaren Gasfeder in Wirkverbindung steht, wobei zu der Gasfeder eine mechanische Feder in Serie geschaltet ist.

Während des Fahrbetriebs auftretende Schwingungen und Stöße werden somit von der Federung abgefangen. Durch die Kombination eines stufenlos höhenverstellbaren Fahrersitzes mit einer stufenlos höhenverstellbaren Bodenplattform kann die Bedienperson die Bodenplattform und den Fahrersitz jeweils unabhängig voneinander und individuell auf ihre Bedürfnisse einstellen und damit in eine ergonomisch günstige Position bringen. Es ist daher möglich, eine optimale Steh- und Sitzergonomie zu erzielen. Je nach Auslegung des Verstellbereichs kann dabei sowohl die sog. 5 Perzentil-Frau als auch der sog. 95 Perzentil-Mann noch erfasst werden.

Mit der mechanischen Feder, die zu der Gasfeder in Serie geschaltet ist, wird die Federwirkung der Gasfeder unterstützt. Darüber hinaus ist auch dann, wenn sich die Gasfeder am Anschlag befindet und die Kolbenstange der Gasfeder nicht weiter ein- bzw. ausfedern kann, noch eine Federwirkung vorhanden. Diese Federwirkung wird dabei ausschließlich von der mechanischen Feder erzeugt. Es ergibt sich insgesamt eine über den gesamten Verstellbereich wirksame Federung.

Es ist ferner möglich, durch geeignete Materialwahl (z.B. gummi-elastische Werkstoffe) und Dimensionierung der mechanischen Feder einen Dämpfungseffekt zu erzielen, der zu der in der Gasfeder bereits vorhandenen Dämpfungswirkung (durch teilweise Befüllung mit Öl erzielt) hinzukommt.

Die mechanische Feder kann außerhalb oder innerhalb der Gasfeder angeordnet sein.

Besonders günstig ist eine Ausgestaltung der Erfindung, bei der die Gasfeder mittels einer hydraulischen Fernverstellung blockier- und lösbar ist. Dadurch kann die Bedienperson in aufgesessenem Zustand bequem den Fahrersitz und/oder die Bodenplattform in der Höhe verstellen, ohne den Fahrerplatz zu verlassen.

Es erweist sich ferner als zweckmäßig, wenn die Gasfeder und/oder die mechanische Feder als Druckfeder ausgebildet ist.

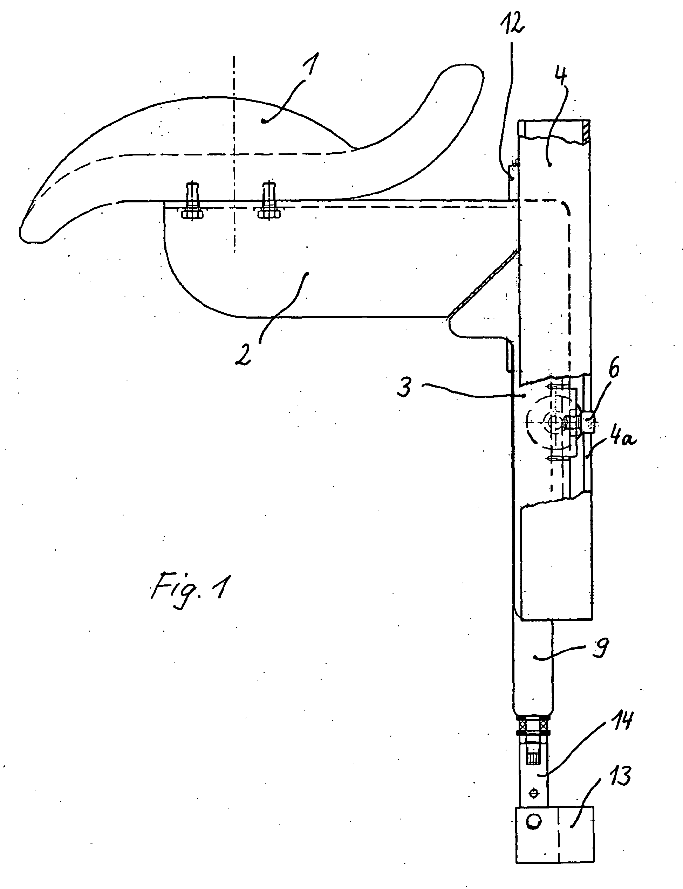

Weitere Vorteile und Einzelheiten der Erfindung werden anhand des in den schematischen Figuren dargestellten Ausführungsbeispieles näher erläutert. Dabei zeigt
- Figur 1: eine Seitenansicht einer Höhenverstellung eines Fahrersitzes eines erfindungsgemäßen Flurförderzeugs,
- Figur 2: eine Ansicht der Höhenverstellung von vorne und

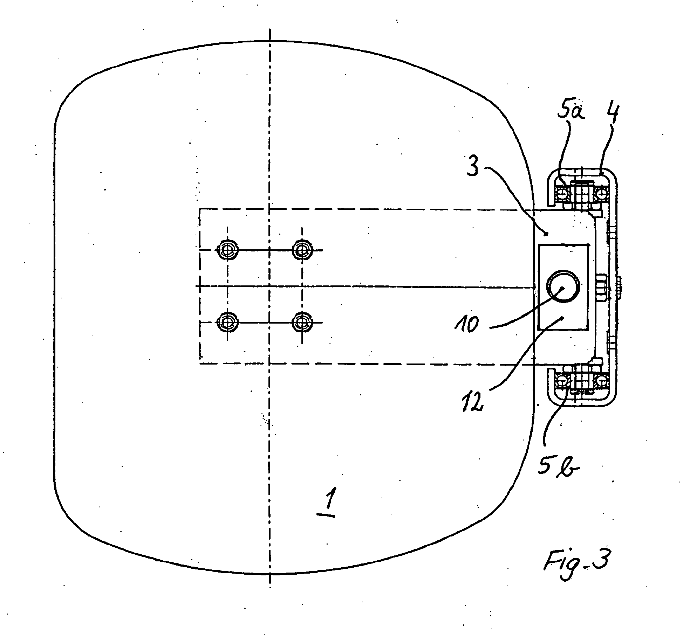

- Figur 3: eine Draufsicht auf die Höhenverstellung.

Das erfindungsgemäße Flurförderzeug kann beispielsweise als Kommissionierstapler oder als Vertikalkommisssionier ausgebildet sein. Die Figuren zeigen einen Fahrersitz 1 samt Höhenverstellung. Der Aufbau der Höhenverstellung des Fahrersitzes 1 kann prinzipiell (unter Anpassung der Abmessungen) auch für die Höhenverstellung der Bodenplattform Verwendung finden. Die Höhenverstellung einer Bodenplattform hat also eine analoge Konstruktion.

Der Fahrersitz 1 ist auf einem Ausleger 2 eines Führungsschlittens 3 befestigt, der in einer Führungsschiene 4 mittels vier Rollen 5a, 5b, 5c und 5d höhenbeweglich gelagert ist. Die Führungsschiene 4 ist mit dem in den Figuren nicht dargestellten Fahrzeugrahmen des erfindungsgemäßen Flurförderzeugs fest verbunden.

In seitlicher Richtung ist der Führungsschlitten 3 mittels zweier vertikal voneinander beabstandeter Schrauben 6 und 7 geführt, die mit dem Führungsschlitten 3 verbunden sind und bei einer Vertikalbewegung des Führungsschlittens 3 in einer Vertikalnut 4a gleiten, die in die Rückseite der Führungsschiene 4 eingearbeitet ist.

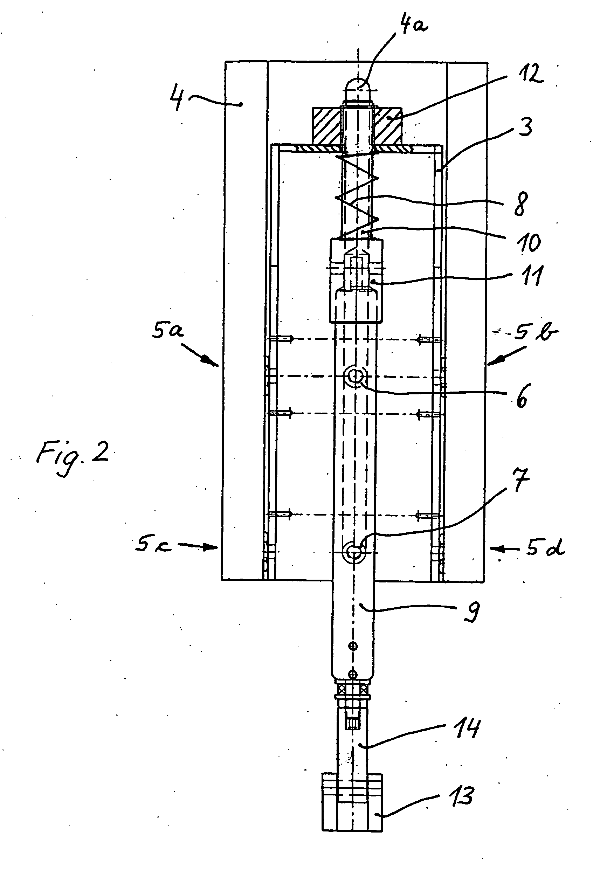

Wie sich insbesondere aus Figur 2 ergibt, ist der Führungsschlitten 3 auf einer mechanischen Feder 8, nämlich einer Druckfeder abgestützt, die ihrerseits auf einer Kolbenstange einer Gasfeder 9 abgestützt ist. Die Gasfeder 9 und die Feder 8 sind folglich in Reihe geschaltet.

Um die Feder 8 auf der Kolbenstange der Gasfeder 9 abstützen zu können, ist die Feder 8 um eine Zentralstange 10 herum angeordnet, die am unteren Ende auf einer mit der Kolbenstange der Gasfeder 9 aus- und einfahrbaren Kappe 11 befestigt ist und am oberen Ende in einem mit dem Führungsschlitten 3 fest verbundenen Aufnahmeblock 12 gleitend geführt (Es ist auch eine umgekehrte Anordnung möglich, bei der die Kolbenstange nach unten weist und die Feder am Zylinderrohr der Gasfeder 9 abgestützt ist).

Die Gasfeder 9 ist als federnd blockierbare Gasfeder ausgebildet, d. h. auch bei blockierter Gasfeder 9 ist eine Federwirkung der Kolbenstange vorhanden (jedenfalls in den Zwischenstellungen zwischen Endanschlägen).

Die Gasfeder 9 ist mit ihrem unteren Ende an einer Halterung 13 befestigt, die mit dem Fahrzeugrahmen fest verbunden ist. Befindet sich die Kolbenstange in der vollständig eingefahrenen Stellung (wie in den Figuren dargestellt) und damit an einem Endanschlag, so wird dennoch eine Federwirkung erzielt, da der Führungsschlitten 3 entgegen der Kraft der mechanischen Feder 8 nach unten beweglich ist.

Um den Fahrersitz 1 in der Höhe zu verstellen wird ein im Bereich der Halterung 13 angeordnetes hydraulisches Auslösesystem 14 betätigt. Dadurch wird die Blockierung der Kolbenstange der Gasfeder 9 aufgehoben. Der mit der Kolbenstange der Gasfeder 9 gekoppelte Führungsschlitten 3 kann sodann durch Entlastung des Fahrersitzes 1 vom Körpergewicht der Bedienperson durch den Gasdruck in der Gasfeder 9 angehoben werden. Alternativ dazu kann durch Belastung des Fahrersitzes 1 der Führungsschlitten 3 entgegen der durch die Gasfeder 9 erzeugten Kraft nach unten bewegt werden.

In den Zwischenstellungen zwischen den Endanschlägen wirken sowohl die Federkraft der Gasfeder 9 als die Federkraft der mechanischen Feder 8.

## Patentansprüche

1. Flurförderzeug mit einem Fahrerplatz, der eine stufenlos verstellbare und gefederte Bodenplattform und einen Fahrersitz (1) aufweist, **dadurch gekennzeichnet, dass** der Fahrersitz (1) gefedert und stufenlos höhenverstellbar ist, wobei der Fahrersitz (1) und die Bodenplattform jeweils auf einem Führungsschlitten (3) befestigt sind, der in einer fest mit dem Flurförderzeug verbundenen Führungsschiene (4) vertikal beweglich gelagert ist und mit einer federnd blockierbaren Gasfeder (9) in Wirkverbindung steht, wobei zu der Gasfeder (9) eine mechanische Feder (8) in Serie geschaltet ist.

2. Flurförderzeug nach Anspruch 1, **dadurch gekennzeichnet, dass** die Gasfeder (9) mittels einer hydraulischen Fernverstellung blockier- und lösbar ist.

3. Flurförderzeug nach Anspruch 1 oder 2, **dadurch gekennzeichnet, dass** die Gasfeder (9) und/oder die mechanische Feder (8) als Druckfeder ausgebildet ist.

## Claims

1. Industrial truck with a driver's station, which has a continuously adjustable and sprung base platform and a driver's seat (1), **characterized in that** the driver's seat (1) is sprung and is continuously vertically adjustable, the driver's seat (1) and the base platform each being fastened on a guide carriage (3), which is mounted in vertically movable fashion in a guide rail (4) fixedly connected to the industrial truck, and is operatively connected to a pneumatic spring (9), which is capable of being blocked in sprung fashion, with a mechanical spring (8) being connected in series with the pneumatic spring (9).

2. Industrial truck according to Claim 1, **characterized in that** the pneumatic spring (9) is capable of being blocked and released by means of a remote hydraulic adjustment.

3. Industrial truck according to Claim 1 or 2, **characterized in that** the pneumatic spring (9) and/or the mechanical spring (8) is in the form of a compression spring.

## Revendications

1. Chariot de manutention comprenant un poste de conduite qui présente une plate-forme de sol réglable en continu et à suspension, et un siège de conducteur (1), **caractérisé en ce que** le siège de conducteur (1) est à suspension et est réglable en hauteur en continu, le siège de conducteur (1) et la plate-forme de sol étant à chaque fois fixés sur un chariot de guidage (3) qui est monté de manière déplaçable verticalement dans un rail de guidage (4) connecté fixement au chariot de manutention, et qui est en liaison fonctionnelle avec un ressort à gaz (9) pouvant être bloqué élastiquement, un ressort mécanique (8) étant monté en série avec le ressort à gaz (9).

2. Chariot de manutention selon la revendication 1, **caractérisé en ce que** le ressort à gaz (9) peut être bloqué et desserré au moyen d'une commande à distance hydraulique.

3. Chariot de manutention selon la revendication 1 ou 2, **caractérisé en ce que** le ressort à gaz (9) et/ou le ressort mécanique (8) sont réalisés sous forme de ressort de pression.
